# NEUE EUROPÄISCHE PATENTSCHRIFT

(11) **EP 1 497 160 B2**
(45) Veröffentlichungstag und Bekanntmachung des Hinweises auf die Entscheidung über den Einspruch: **21.07.2010**
(45) Hinweis auf die Patenterteilung: 29.03.2006
(21) Anmeldenummer: 03708054.6
(22) Anmeldetag: 13.01.2003
(51) Int. Cl.: B60R 21/01, G01S 17/02, G08B 13/196, G08B 15/00

(54) **SICHERHEITSVORRICHTUNG FÜR EIN FAHRZEUG**
SAFETY DEVICE FOR A VEHICLE
DISPOSITIF DE SECURITE POUR VEHICULE

(30) Priorität: 19.04.2002 LU 90912; 26.04.2002 LU 90914
(43) Veröffentlichungstag der Anmeldung: 19.01.2005
(73) Patentinhaber: IEE INTERNATIONAL ELECTRONICS & ENGINEERING S.A., 6468 Echternach (LU)
(72) Erfinder: SCHMIZ, Marc, 2629 Luxembourg (LU); BECKER, Guido, 66679 Losheim am See (DE); MOUSEL, Thierry, L-5637 Mondorf-les-Bains (LU)
(74) Vertreter: Office Freylinger
(86) Internationale Anmeldenummer: PCT/EP2003/000238
(87) Internationale Veröffentlichungsnummer: WO 2003/089277

(56) Entgegenhaltungen:
- EP-A- 0 885 782
- EP-A- 1 069 001
- WO- -01/19648
- WO-A-01/19648
- WO-A-02/08022
- WO-A-96/15626
- WO-A-98/10255
- DE- - 10 035 531
- DE-A- 19 752 145
- DE-A1- 19 956 266
- FR-A- 2 815 135
- US- - 6 061 014
- US-A- 5 737 083
- US-B1- 6 198 998
- IRANI M ET AL: "A UNIFIED APPROACH TO MOVING OBJECT DETECTION IN 2D AND 3D SCENES" IEEE TRANSACTIONS ON PATTERN ANALYSIS AND MACHINE INTELLIGENCE, IEEE INC. NEW YORK, US, Bd. 20, Nr. 6, 1. Juni 1998 (1998-06-01), Seiten 577-589, XP000773365 ISSN: 0162-8828

## Beschreibung

### Einleitung

Die vorliegende Erfindung betrifft eine Sicherheitsvorrichtung für ein Fahrzeug, insbesondere eine Vorrichtung zur Erkennung und/oder Lokalisierung von Objekten bzw. Personen im Bereich eines Fahrzeugs. Eine solche Vorrichtung kann beispielsweise in einem Passagierrückhaltesystem zur Steuerung eines oder mehrerer Airbags, in einem Komfortsystem (zum automatischen Einstellen von Kopfstützen und/oder Fahrzeugsitzen und/oder Rückspiegeln, etc.) oder in einem System zur Unfallvermeidung eingesetzt werden. Die Erfindung betrifft ebenfalls ein Verfahren zur Erkennung und/oder Lokalisierung von Objekten bzw. Personen.

Um bei einem Verkehrsunfall die Verletzungsrisiken für die Fahrzeuginsassen zu senken, werden moderne Fahrzeuge im allgemeinen mit einem aktiven Passagierrückhaltesystem ausgestattet. Ein solches aktives Passagierrückhaltesystem umfasst einen oder mehrere Airbags, die bei einem Aufprall des Fahrzeugs blitzschnell aufgeblasen werden und die von dem Passagier bei dem Aufprall freigegebene Energie aufnehmen, sowie gegebenenfalls Gurtstraffer o.ä..

Da ein Airbag wie z.B. ein Frontalairbag mit sehr hohen Geschwindigkeiten (200 bis 300 km/h) aus dem Armaturenbrett bzw. dem Pralltopf des Lenkrades austritt, kann der Passagier, bei entsprechend ungünstiger Sitzhaltung, gegebenenfalls Verletzungen durch den auslösenden Airbag erleiden. Um dies zu vermeiden hat man mikroprozessorgesteuerte Rückhaltesysteme mit mehreren Betriebsmoden entwickelt, die eine Anpassung verschiedener Auslöseparameter des Rückhaltesystems in Abhängigkeit u.a. der Position des Passagiers auf dem Fahrzeugsitz oder seiner Statur ermöglichen, wie z.B. der Aufblaszeitpunkt, die Aufblasgeschwindigkeit und/oder das Aufblasvolumen des Airbags.

Damit eine solche Anpassung der Auslöseparameter des Rückhaltesystems durch den Mikroprozessor ermöglicht wird, muss dieser natürlich mit verschiedenen, die Sitzposition oder die Statur des jeweiligen Passagiers betreffenden Parametern versorgt werden. Ein derartiges Passagierrückhaltesystem muss folglich mit einer Vorrichtung zum Ermitteln eben dieser Parameter ausgerüstet sein.

Bekannte Vorrichtungen zum Ermitteln der Statur bzw. der Sitzposition eines Passagiers basieren beispielsweise auf der Ermittlung der Gewichtsverteilung des Passagiers in dem Sitz. Anhand der ermittelten Gewichtsverteilung lassen sich anhand statistischer Korrelationsfunktionen Rückschlüsse auf die zu ermittelnden Parameter ziehen.

Einen völlig anderen Ansatz zur Erkennung einer Sitzbelegung verfolgen Systeme, die mittels bildgebender Systeme eine Präsenz und gegebenenfalls eine Sitzposition eines Passagiers ermitteln. Bei derartigen Systemen wird der Innenraum des Fahrzeugs mittels einer oder mehreren Kameras überwacht und das aufgenommene Videosignal mittels geeigneter Bildverarbeitungsverfahren ausgewertet. Durch den Einsatz moderner CCD oder CMOS Kameras mit hoher Auflösung kann mit solchen Systemen eine verhältnismäßig genaue Objekterkennung erreicht werden, d.h. es kann verhältnismäßig genau unterschieden werden, ob der Fahrzeugsitz unbesetzt ist oder ob er durch einen Kindersitz oder durch einen Passagier besetzt ist. Durch die Ermittlung der vertikalen Position des Kopfs eines Passagiers kann darüber hinaus auf die Statur des Passagiers geschlossen werden.

Zur genauen Ermittlung der Sitzposition eines Passagiers wird neben der zweidimensionalen Bildinformation zusätzlich eine Tiefeninformation benötigt, d.h. eine Information über die Entfernung zwischen der Kamera und dem interessierenden Objekt (z.B. dem Kopf des Passagiers). Hierzu sind beispielsweise stereoskopische Verfahren bekannt, die aus zwei seitlich versetzt aufgenommenen Bildern eine Tiefeninformation errechnen. Eine nach einem solchen Verfahren arbeitende Vorrichtung ist beispielsweise aus der EP-A-0 885 782 bekannt.

Alternativ zu diesen stereoskopischen Verfahren sind Verfahren bekannt, die eine Unschärfe des aufgenommenen Bildes bezüglich einer Brennpunktsebene auswerten. Der Innenraum des Fahrzeugs wird mit einer einzelnen Kamera mit vergleichsweise geringer Tiefenschärfe aufgenommen. Ein Objekt, das sich in einer von der Brennpunktsebene verschiedenen Ebene befindet ist in dem aufgenommenen Bild unscharf abgebildet. Mittels geeigneter Bildverarbeitungsverfahren kann diese Unschärfe rechnerisch ermittelt und hieraus auf die Entfernung des Objekts zu der Brennpunktsebene geschlossen werden. Ein derartiges Verfahren ist beispielsweise in der US-A-6,198,998 beschrieben.

Die beschriebenen Verfahren und Vorrichtungen liefern aufgrund der guten Auflösung von modernen CCD oder CMOS Kameras gute Ergebnisse bei der Objekterkennung. Allerdings ist die zu verarbeitende Datenmenge bei solchen Systemen insbesondere bei Verwendung von stereoskopischen Verfahren verhältnismäßig groß. Da eine Ermittlung der Position eines Passagiers in Echtzeit erfolgen muss, stellen diese Systeme enorme Anforderungen an das bildverarbeitende System.

Neben diesen auf der Auswertung von zweidimensionalen Aufnahmen beruhenden Vorrichtungen sind Systeme bekannt, die anhand einer Laufzeitmessung von moduliertem IR-Licht direkt eine Tiefeninformation zu der Bildinformation liefern. Solche 3D-Kameras sind beispielsweise aus den Veröffentlichungen WO-A-96/15626 und WO-A-98/10255 bekannt. Im Gegensatz zu den oben beschriebenen 2D-Kameras weisen 3D Kameras eine vergleichsweise geringe Auflösung auf, wodurch sich die zu bearbeitende Datenmenge wesentlich reduziert. Darüber hinaus liegt die zur Positionsbestimmung des interessierenden Objekts benötigte Tiefeninformation unmittelbar vor. Allerdings bereitet die geringe Auflösung einer 3D-Kamera Probleme mit der sicheren Objekterkennung. Die WO-A-02/08022, welches als nächstliegender Stand der Technik ungesehen wird, offenbart eine Vorrichtung zur Erhennung und Lokalisierung von Objekten umfassend eine 3D-kamera zur Aufnahme von dreidimensionalen Situationsbildern eines zu überwachenden Ravins und erste Mittel zum Auswerten der dreidimensionalen Situationsbilder mittels geeigneter Objekterhennungsverfahren zur Bestimmung eines in dem zu überwachenden Ravin vorhaudenen Objekts und zur Bestimmung der Lage des Objekts im Ravin

### Aufgabe der Erfindung

Aufgabe der vorliegenden Erfindung ist es folglich, ein verbessertes System zur Erkennung und Lokalisierung von Objekten vorzuschlagen. .

### Allgemeine Beschreibung der Erfindung

Diese Aufgabe wird erfindungsgemäß gelöst durch eine Vorrichtung zur Erkennung und Lokalisierung von Objekten umfassend
eine 3D-Kamera zur Aufnahme von dreidimensionalen Situationsbildern eines zu überwachenden Raums;
erste Mittel zum Auswerten der dreidimensionalen Situationsbilder mittels geeigneter Objekterkennungsverfahren zur Bestimmung eines in dem zu überwachenden Raum vorhandenen Objekts und zur Bestimmung der Lage des Objekts im Raum;
eine 2D-Kamera zur Aufnahme von zweidimensionalen Situationsbildern desjenigen Bereichs des zu überwachenden Raums, in dem die Lage des Objekts bestimmt wurde; und
zweite Mittel zum Auswerten der zweidimensionalen Situationsbilder mittels geeigneter Objekterkennungsverfahren zur erneuten Bestimmung des in dem zu überwachenden Raum vorhandenen Objekts.

Neben der Vorrichtung betrifft die Erfindung ebenfalls ein Verfahren zur Erkennung und Lokalisierung von Objekten, umfassend die Schritte:
Aufnahme eines ersten, dreidimensionalen Situationsbildes eines zu überwachenden Raums mittels einer 3D-Kamera,
Auswerten des ersten, dreidimensionalen Situationsbildes mittels geeigneter Objekterkennungsverfahren zur Bestimmung eines in dem zu überwachenden Raum vorhandenen Objekts und zur Bestimmung der Lage des Objekts im Raum;
Aufnahme eines zweiten, zweidimensionalen Situationsbildes eines bestimmten Bereichs des zu überwachenden Raums mittels einer 2D-Kamera, wobei der bestimmte Bereich dem Bereich des Raumes entspricht in dem die Lage des Objekts bestimmt wurde;
Auswerten des zweiten, zweidimensionalen Situationsbildes zur erneuten Bestimmung des vorhandenen Objekts.

Alternativ wird die Aufgabe ebenfalls gelöst durch eine Vorrichtung zur Erkennung und Lokalisierung von Objekten umfassend
eine 3D-Kamera zur Aufnahme von dreidimensionalen Situationsbildern eines zu überwachenden Raums;
erste Mittel zum Auswerten der dreidimensionalen Situationsbilder mittels geeigneter Objekterkennungsverfahren zur Bestimmung eines in dem zu überwachenden Raum vorhandenen Objekts und zur Bestimmung der Lage des Objekts im Raum;
eine 2D-Kamera zur Aufnahme von zweidimensionalen Situationsbildern des zu überwachenden Raums; und
zweite Mittel zum Auswerten eines bestimmten Bereichs der zweidimensionalen Situationsbilder mittels geeigneter Objekterkennungsverfahren zur erneuten Bestimmung des in dem zu überwachenden Raum vorhandenen Objekts, wobei der bestimmte Bereich dem Bereich des Raumes entspricht in dem die Lage des Objekts bestimmt wurde.

In diesem Fall umfasst das Verfahren zur Erkennung und Lokalisierung von Objekten die Schritte Verfahren zur Erkennung und Lokalisierung von Objekten, umfassend die Schritte:
Aufnahme eines ersten, dreidimensionalen Situationsbildes eines zu überwachenden Raums mittels-einer 3D-Kamera,
Auswerten des ersten, dreidimensionalen Situationsbildes mittels geeigneter Objekterkennungsverfahren zur Bestimmung eines in dem zu überwachenden Raum vorhandenen Objekts und zur Bestimmung der Lage des Objekts im Raum;
Aufnahme eines zweiten, zweidimensionalen Situationsbildes des zu überwachenden Raums mittels einer 2D-Kamera;
Auswerten eines bestimmten Bereichs des zweiten, zweidimensionalen Situationsbildes zur erneuten Bestimmung des vorhandenen Objekts, wobei der bestimmte Bereich dem Bereich des Raumes entspricht in dem die Lage des Objekts bestimmt wurde.

Die erfindungsgemäße Vorrichtung beziehungsweise das erfindungsgemäße Verfahren verbinden auf vorteilhafte Weise die Vorteile bezüglich der Schnelligkeit und der geringen Datenmenge eines 3D-Kamerasystems mit der hohen Auflösung und der dadurch ermöglichten sicheren Erkennung des Objektes von 2D-Kamerasystemen. In der Tat wird mit der vorgeschlagenen Vorrichtung zunächst der gesamte zu überwachende Raum mit Hilfe einer 3D-Kamera erfasst und das hierbei gewonnene Bild im Hinblick auf eine erste Objekterkennung ausgewertet. Da die Auflösung einer 3D-Kamera verhältnismäßig gering ist, sind die zu verarbeitenden Datenmengen entsprechend gering. Die gleichzeitig erhaltenen Tiefeninformationen können zur Positionsbestimmung unmittelbar verwendet werden.

Anschließend kann mit der 2D-Kamera beispielsweise lediglich der interessierende Bereich des zu überwachenden Raums, d.h. der Bereich in dem die Lage des Objekts bestimmt wurde, mit Hilfe der 2D-Kamera erneut erfasst werden. Das dabei gewonnene zweidimensionale Bild hoher Auflösung wird anschlie-ßend im Hinblick auf eine erneute Objekterkennung verarbeitet. In der beschriebenen alternativen Ausgestaltung der Erfindung wird mit der 2D-Kamera ein zweidimensionales Bild des gesamten zu überwachenden Bereichs aufgenommen aber lediglich der interessierende Bereich des Bildes ausgewertet.

Die erste Objekterkennung, die auf der Basis des dreidimensionalen Bildes durchgeführt wurde, kann durch diese erneute Auswertung verifiziert werden, wodurch der Nachteil der geringen Auflösung des dreidimensionalen Bildes ausgeglichen werden kann. Es ist anzumerken, dass die zu verarbeitende Datenmenge bei der Verifizierung der Objekterkennung gegenüber einer herkömmlichen Objekterkennung im Raum wesentlich verringert ist, da bei dieser Verifizierung entweder lediglich der interessierende Bereich des Raumes erfasst und verarbeitet wird oder lediglich der interessierende Bereich des 2D-Bildes ausgewertet wird. Im Vergleich zu den herkömmlichen Objekterkennungsverfahren reduzieren beide Alternativen der Erfindung demnach (auf unterschiedliche Art und Weise) die bei der 2D Objekterkennung zu verarbeitenden Datenmenge.

Das erfindungsgemäße Verfahren zeichnet sich demnach durch eine äusserst schnelle Ermittlung der Position eines Objektes und eine hohe Sicherheit der Objekterkennung bei gleichzeitig kleinen zu verarbeitenden Datenmengen aus.

Es ist anzumerken, dass bei der ersten Ausgestaltung der Erfindung die Einschränkung des aufgenommenen 2D-Bildbereichs auf den interessierenden Bereich entweder durch ein Verschwenken der 2D-Kamera oder durch eine Zoomfunktion der Kamera erreicht werden kann. Im Gegensatz dazu muss bei der zweiten Ausgestaltung die 2D-Kamera weder beweglich ausgestaltet noch mit einer Zoomfunktion ausgestattet sein. In der Tat kann der Aufnahmebereich der 2D-Kamera demjenigen der 3D-Kamera entsprechen, da die Reduzierung der zu verarbeitenden Datenmenge softwaremäßig erfolgen kann. Es wird lediglich der Teil des aufgenommenen Gesamtbildes verarbeitet, der das zu erkennende Objekt enthält.

Aufgrund der geringen Datenmengen sind die Anforderungen an die Prozessorleistung des Systems entsprechend gering. Dies ermöglicht vorzugsweise die Implementierung der ersten Mittel zum Auswerten der dreidimensionalen Situationsbilder und der zweiten Mittel zum Auswerten der zweidimensionalen Situationsbilder in einer gemeinsamen Prozessoreinheit.

In einer vorteilhaften Ausgestaltung der Vorrichtung sind die 3D-Kamera und die 2D-Kamera unmittelbar benachbart angeordnet. Die 3D-Kamera und die 2D-Kamera können beispielsweise in einem gemeinsamen Gehäuse angeordnet sein. Durch eine solche Anordnung werden Parallaxenfehler zwischen den aufgenommenen zweidimensionalen und dreidimensionalen Bildern wirksam vermieden. Außerdem wird die Zuordnung der einzelnen Detektionsbereiche vereinfacht.

In einer vorteilhaften Ausgestaltung der Erfindung arbeiten die 3D-Kamera und die 2D-Kamera in dem gleichen Spektralbereich. Dabei arbeiten beide Kameras vorzugsweise mit einer gemeinsamen Lichtquelle zum Beleuchten des zu überwachenden Raums mit Licht einer in dem Spektralbereich, z.B. einem Infrarotbereich, enthaltenen Wellenlänge. Hierdurch werden Fehler durch unterschiedliche Beleuchtung des zu erkennenden Objekts wirksam vermieden. Darüber hinaus kann der Einfluss von Fremdbeleuchtung wesentlich verringert werden so dass vereinfachte Algorithmen zur Bildverarbeitung eingesetzt werden können.

Die Lichtquelle ist vorteilhaft zusammen mit der 3D-Kamera und der 2D-Kamera in einem gemeinsamen Gehäuse angeordnet.

In einer Anwendung des oben beschriebenen Verfahrens betrifft die Erfindung ebenfalls ein Verfahren zur Steuerung eines Rückhaltesystems in einem Fahrzeug, umfassend die Schritte:
Bestimmen eines Objekts und Ermittlung der Lage des Objekts im Bereich eines Fahrzeugsitzes,
Erzeugen eines für die Art und Position des bestimmten Objekts spezifischen Steuersignals und Übermitteln des Steuersignals an eine Steuereinheit des Rückhaltesystems;
Auswählen eines geeigneten Funktionsmodus des Rückhaltesystems auf der Basis des übermittelten Steuersignals.

Die Erfindung wird in diesem Fall zur Klassifizierung einer Sitzbelegung eingesetzt, wobei die hohe Erkennungssicherheit des zu erkennenden Objekts, z.B. eines Kindersitzes oder eines Kopfes eines Fahrzeuginsassen, eine sichere Klassifizierung der Sitzbelegung erkennt. Ein nach dieser Methode arbeitendes Rückhaltesystem kann folglich mit einer besonders geringen Fehlerquote in einen für die momentan ermittelte Belegungssituation angemessenen Modus geschaltet werden.

Es ist anzumerken, dass die Positionsbestimmung des Kopfes eines Insassen eine Berechnung der Einsitzhöhe dieses Insassen ermöglicht. Eine vorteilhafte Ausgestaltung des Verfahrens berücksichtigt diese Höhe des Oberkörpers bei der Klassifizierung der Sitzbelegung. In diesem Fall umfasst die Erzeugung eines Steuersignals die Berechnung einer Höhe eines Oberkörpers des Fahrzeuginsassen auf der Basis der Position des Kopfes.

Die vorliegende Erfindung kann vorzugsweise auch in einem Verfahren zur Unfallvermeidung eingesetzt werden. Ein solches Verfahren zur Unfallvermeidung bei einem Fahrzeug umfasst beispielsweise die Schritte: Bestimmen eines Objekts und Ermittlung der Lage des Objekts im Bereich einer Fahrerumgebung nach dem oben beschriebenen Verfahren und das Einleiten von geeigneten Maßnahmen, falls die bestimmte Lage des Objekts einem sicheren Führen des Fahrzeugs potentiell entgegensteht.

Dieses Verfahren kann beispielsweise eingesetzt werden, um eine für das Führen des Fahrzeugs untypische Körperhaltung des Fahrers zu detektieren. Eine solche untypische Körperhaltung kann durch eine akute Erkrankung, durch Übermüdung oder durch leichtsinniges Verhalten des Fahrers entstehen.

Bei einer möglichen Ausgestaltung des Verfahrens umfasst das Objekt einen Körperteil des Fahrers, wobei die geeigneten Maßnahmen eingeleitet werden, wenn die Lage des Körperteils in einem Bereich bestimmt wird, der mit einer unangebrachten Körperhaltung zum Führen des Fahrzeugs assoziiert ist. Der Körperteil kann z.B. den Kopf des Fahrers umfassen. Falls der Fahrer aufgrund einer Erkrankung oder infolge von Übermüdung eine Körperhaltung mit nach vorne geneigtem Oberkörper einnimmt, befindet sich der Kopf in einer Position, die zum sicheren Führen des Fahrzeugs nicht geeignet ist. Beim Erkennen einer derartigen atypischen Kopfposition können nach dem vorliegenden verfahren geeignete Gegenmaßnahmen eingeleitet werden.

Eine ähnliche atypische Kopfposition kann auch durch leichtsinniges Verhalten des Fahrers entstehen, wenn dieser beispielsweise einen Gegenstand vom Fahrzeugboden oder von einem Rücksitz des Fahrzeugs aufhebt. Auch eine solche Position des Kopfes kann mit dem vorliegenden Verfahren erkannt werden und entsprechende Maßnahmen können eingeleitet werden. Alternativ zu dem Kopf können auch andere Körperteile des Fahrers auf atypisches oder leichtsinniges Verhalten kontrolliert werden. So kann beispielsweise eine Bestimmung eines Fußes im Bereich des Armaturenbretts als äußerst gefährliche und grob fahrlässige Körperhaltung erkannt werden. Mit der genannten Methode lässt sich auch feststellen, falls das Lenkrad von beiden Händen losgelassen wird. In all diesen Fällen lassen sich geeignete Maßnahmen wie beispielsweise das Erzeugen eines optischen oder akustischen Warnsignals und/oder das Auslösen eines Notbremssystems und/oder das Aufzeichnen des Fahrerverhaltens und/oder das Auswählen eines geeigneten Funktionsmodus des Rückhaltesystems einleiten. Hierbei ist zu bemerken, dass insbesondere das Aufzeichnen der Fahrerverhaltens bei einem eventuellen Unfall wichtige Aufschlüsse über die Schuldigkeit des Fahrers liefern kann.

In einer anderen Ausgestaltung des Verfahrens umfasst das Objekt einen Gegenstand, und wobei eine oder mehrere der beschriebenen Maßnahmen eingeleitet werden, wenn die Lage des Gegenstands in einem Sichtbereich des Fahrers bestimmt wird. Mit einem solchen Verfahren kann beispielsweise ein akustischer Warnton erzeugt werden, falls ein grob fahrlässig handelnder Fahrer während der Fahrt eine Landkarte studiert oder, beispielsweise bei stockendem Verkehr, Zeitung liest.

Es ist anzumerken, dass für das voranstehend beschriebene Verfahren, das Kamerasystem vorzugsweise in einem Bereich unmittelbar vor dem Fahrer des Fahrzeugs angeordnet ist.

Eine weitere vorteilhafte Anwendung findet das erfindungsgemäße Verfahren bzw. die erfindungsgemäße Vorrichtung bei der Steuerung eines Precrash-Systems, wobei in Abhängigkeit der Art des bestimmten Objekts und seiner Lage im Außenbereich des Fahrzeugs geeignete Sicherheitsmassnahmen eingeleitet werden. Ein solches System kann beispielsweise beim Herannahen des Fahrzeugs auf ein Hindernis im Frontbereich (bzw. bei Rückwärtsfahrt im Heckbereich) ein Notbremssystem auslösen. In einer anderen Variante kann beim Erkennen eines Fußgängers in unmittelbarer Nähe vor dem fahrenden Fahrzeug in Außenairbag gezündet werden oder die Motorhaube des Fahrzeugs in eine leicht angehobene Stellung verkippt werden, um Verletzungen des Fußgängers zu vermeiden oder zumindest zu verringern.

In einer weiteren Anwendung kann die Erfindung bei der Steuerung eines Diebstahlwarnsystems in einem Fahrzeug eingesetzt werden. Möglich ist auch der Einsatz in einem komforterhöhenden System, bei der verschiedene Komfortfunktionen an die Einsitzhöhe des jeweiligen Passagiers eingestellt werden.

Es ist anzumerken, dass bei der Kombination mehrerer Anwendungen im Fahrzeug mehrere Kameraeinheiten an eine gemeinsame Auswerteelektronik angeschlossen sein können. So kann beispielsweise eine erste Kameraeinheit den Fahrzeuginnenraum zwecks Sitzbelegungserkennung überwachen während eine zweite Kameraeinheit den Außenbereich des Fahrzeugs vor dem Fahrzeug überwacht und eine dritte Einheit den Außenbereich hinter dem Fahrzeug.

Es ist weiterhin anzumerken, dass das vorhandene Kamerasystem auch in anderen Applikationen oder Anwendungen eingesetzt werden kann. So ist beispielsweise eine Videotelefonübertragung mittels der eingebauten Kamera denkbar.

### Beschreibung anhand der Figuren

Im folgenden wird eine Ausgestaltung der Erfindung anhand der beiliegenden Figuren beschrieben. Es zeigen:
- Fig.1:: schematisch eine Anwendung des erfindungsgemäßen Verfahrens zur Innenraumüberwachung in einem Fahrzeug;
- Fig.2:: einen möglichen Aufbau einer Ausgestaltung einer erfindungsgemäßen Vorrichtung;
- Fig.3:: ein Ablaufdiagramm einer Ausgestaltung eines Verfahrens zur Klassifizierung eine Sitzbelegung;
- Fig.4:: eine Verwendung des Verfahrens in einem Precrash-System;
- Fig.5:: eine Draufsicht auf das in Fig.4 dargestellte Fahrzeug zur Illustrierung der Sichtfelder;
- Fig.6:: eine mögliche Einbauvariante einer Ausgestaltung einer erfindungsgemäßen Vorrichtung in ein Fahrzeug;
- Fig.7:: eine kombinierte Vorrichtung zur Außen- und Innenüberwachung

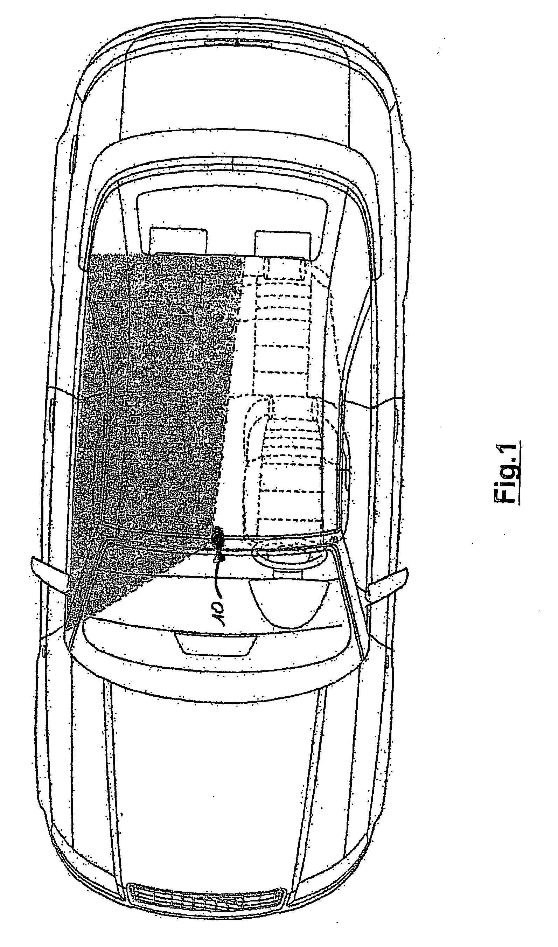

In der Fig. 1 wird schematisch der Einsatz einer erfindungsgemäßen Vorrichtung bei der Innenraumüberwachung eines Fahrzeugs dargestellt. Eine Vorrichtung 10 zum Erkennen und Lokalisieren eines Objekts ist bei einem solchen Einsatz beispielsweise im vorderen Bereich des Fahrzeugs unmittelbar unterhalb der Fahrzeugdecke angeordnet. In der dargestellten Ausgestaltung handelt es sich um ein Kameramodul zur Überwachung der Beifahrerseite, d.h. das Sichtfeld der Kamera ist zu der Beifahrerseite hin gerichtet. Alternativ kann die Vorrichtung selbstverständlich derart angeordnet sein, dass das Sichtfeld des Kameramoduls zur Fahrerseite hin gerichtet ist. Je nach Anordnung und Ausgestaltung des Kameramoduls können auch beide Fahrzeugseiten und/oder der Rücksitzbereich des Fahrzeugs gleichzeitig überwacht werden.

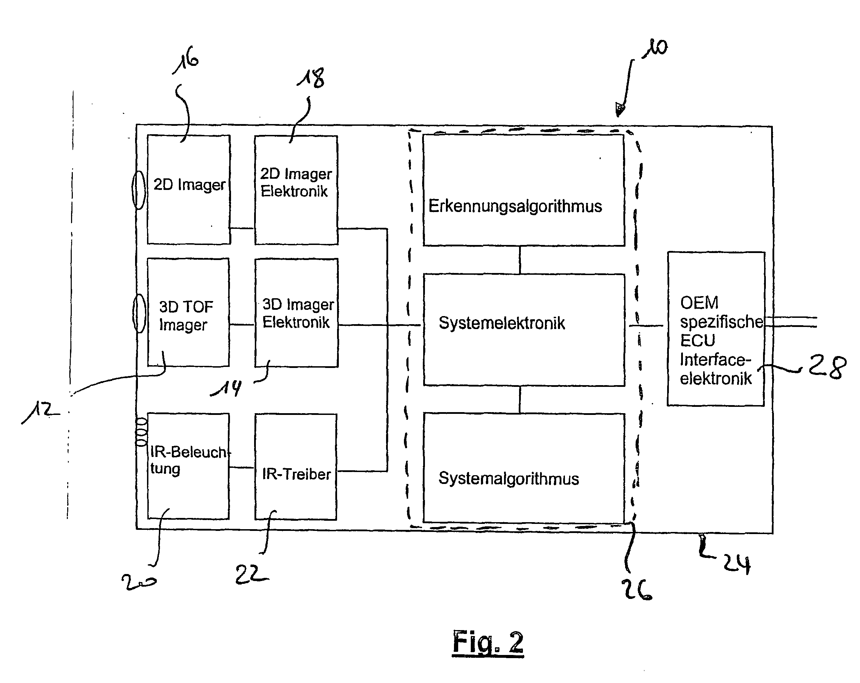

Ein möglicher Aufbau eines Kameramoduls 10 ist in der Fig. 2 dargestellt. Es umfasst im wesentlichen eine 3D-Kamera 12 mit angeschlossener Elektronik 14, eine 2D-Kamera 16 mit angeschlossener Elektronik 18 sowie eine geeignete Beleuchtungsquelle 20 mit zugehörigem Treiber 22. Die Kameras sind vorzugsweise unmittelbar benachbart zueinander angeordnet, so dass Parallaxenfehler zwischen den zweidimensionalen und den dreidimensionalen Bildern vermieden werden. Vorzugsweise sind die 3D-Kamera, die 2D-Kamera 16 sowie die Beleuchtungsquelle 20 in einem gemeinsamen Gehäuse 24 angeordnet, in dem weiterhin die Prozessoreinheit 26 angeordnet ist. Das Modul 10 kann als vorgefertigte Einheit hergestellt werden, die beim Einbau in das Fahrzeug über eine spezifische Schnittstelle 28 an die Steuerelektronik eines Rückhaltesystems angeschlossen wird.

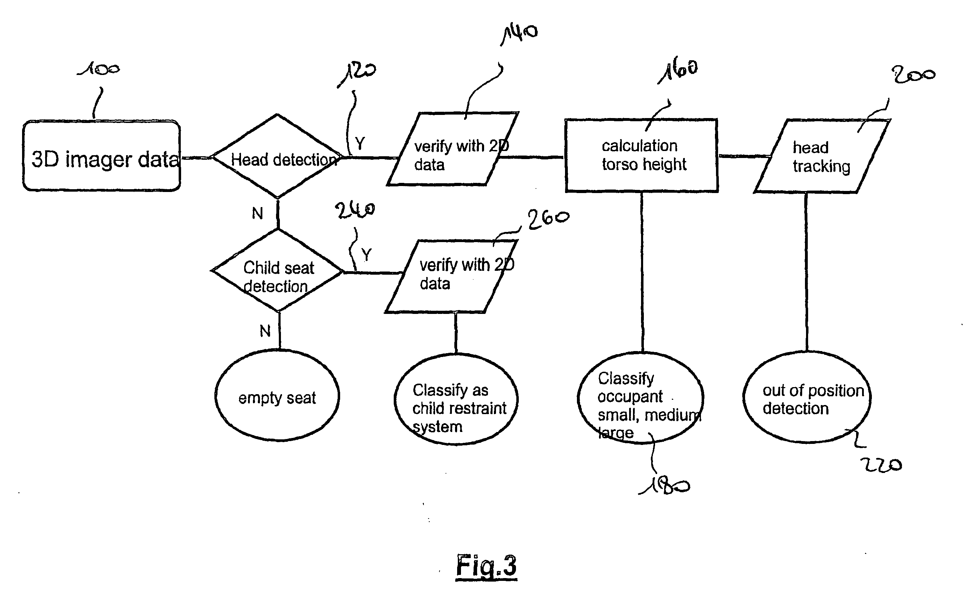

Fig. 3 zeigt ein Ablaufdiagramm einer Ausgestaltung des erfindungsgemäßen Verfahrens bei der Verwendung zur Airbagsteuerung. Zunächst wird mittels der 3D-Kamera ein dreidimensionales Bild aufgenommen und ausgewertet 100. Kommt diese Objekterkennung zu dem Ergebnis, dass es sich bei dem Objekt um einen Kopf eines Passagiers handelt 120 wird (nach Verifizierung der Erkennung mit dem 2D-System 140) einerseits die Höhe des Oberkörpers berechnet 160 um eine Klassifizierung des Passagiers vorzunehmen 180 und andererseits die Position des Kopfes verfolgt 200, um eine Bestimmung der Sitzposition durchzuführen 220.

Handelt es sich bei dem erkannten Objekt nicht um einen Kopf eines Passagiers sondern um einen Kindersitz 240, so wird die Sitzbelegung nach Verifizierung mit dem 2D-System 260 als Kindersitzbelegung klassifiziert und entsprechend der Airbag in einen hierfür geeigneten Modus geschaltet.

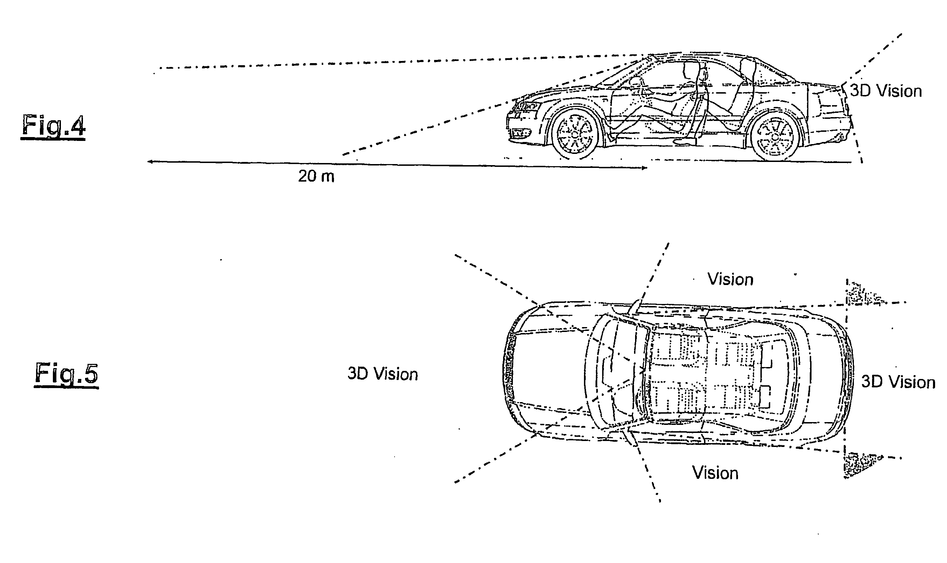

Die Fig. 4 und Fig. 5 zeigen den Einsatz einer Vorrichtung bei der Steuerung eines Precrash-Systems. An geeigneten Stellen eingebaute Kameramodule überwachen den Bereich vor bzw. hinter dem Fahrzeug um beim Herannahen des Fahrzeugs an ein Hindernis entsprechende Schutzmassnahmen einzuleiten. Auch eine Überwachung des Bereichs seitlich des Fahrzeugs ist dargestellt.

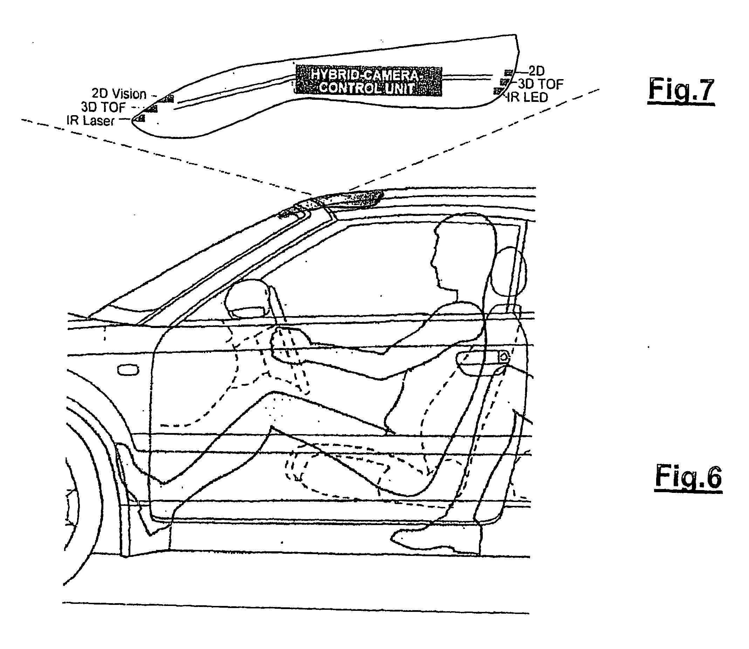

In den Figuren 6 und 7 wird ein kombiniertes Modul zur Außen- und Innensensierung sowie eine mögliche Einbauvariante in einem Fahrzeug dargestellt. In dem kombinierten System sind verschiedene Gruppen bestehend aus 3D-Kamera, 2D-Kamera und Beleuchtung an eine einzige Auswerteeinheit angeschlossen. Hierdurch kann eine erhebliche Platzeinsparung erreicht werden.

## Patentansprüche

1. Vorrichtung (10) zur Erkennung und Lokalisierung von Objekten umfassend eine 3D-Kamera (12) zur Aufnahme von dreidimensionalen Situationsbildem eines zu überwachenden Raums, wobei die 3D-Kamera (12) anhand einer Laufzeitmessung von moduliertem IR Licht direkt eine Tiefeninformation zu der Bildinformation liefert;
erste Mittel zum Auswerten der dreidimensionalen Situationsbilder mittels geeigneter Objekterkennungsverfahren zur Bestimmung eines in dem zu überwachenden Raum vorhandenen Objekts und zur Bestimmung der Lage des Objekts im Raum;
eine 2D-Kamera (16) zur Aufnahme von zweidimensionalen Situationsbildern desjenigen Bereichs des zu überwachenden Raums, in dem die Lage des Objekts bestimmt wurde; und
zweite Mittel zum Auswerten der zweidimensionalen Situationsbilder mittels geeigneter Objekterkennungsverfahren zur erneuten Bestimmung des in dem zu überwachenden Raum vorhandenen Objekts.

2. Vorrichtung (10) zur Erkennung und Lokalisierung von Objekten umfassend eine 3D-Kamera zur Aufnahme von dreidimensionalen Situationsbildern eines zu überwachenden Raums, wobei die 3D-Kamera (12) anhand einer Laufzeitmessung von moduliertem IR Licht direkt eine Tiefeninformation zu der Bildinformation liefert;
erste Mittel (12) zum Auswerten der dreidimensionalen Situationsbilder mittels geeigneter Objekterkennungsverfahren zur Bestimmung eines in dem zu überwachenden Raum vorhandenen Objekts und zur Bestimmung der Lage des Objekts im Raum;
eine 2D-Kamera (16) zur Aufnahme von zweidimensionalen Situationsbildern des zu überwachenden Raums; und
zweite Mittel zum Auswerten eines bestimmten Bereichs der zweidimensionalen Situationsbilder mittels geeigneter Objekterkennungsverfahren zur erneuten Bestimmung des in dem zu überwachenden Raum vorhandenen Objekts, wobei der bestimmte Bereich dem Bereich des Raumes entspricht in dem die Lage des Objekts bestimmt wurde.

3. Vorrichtung nach Anspruch 1 oder 2, wobei die ersten Mittel zum Auswerten der dreidimensionalen Situationsbilder und die zweiten Mittel zum Auswerten der zweidimensionalen Situationsbilder in einer gemeinsamen Prozessoreinheit (26) implementiert sind.

4. Vorrichtung nach einem der Ansprüche 1 bis 3, wobei die 3D-Kamera (12) und die 2D-Kamera (16) unmittelbar benachbart angeordnet sind.

5. Vorrichtung nach Anspruch 4, wobei die 3D-Kamera (12) und die 2D-Kamera (16) in einem gemeinsamen Gehäuse (24) angeordnet sind.

6. Vorrichtung nach einem der Ansprüche 1 bis 5, wobei die 3D-Kamera (12) und die 2D-Kamera (16) in dem gleichen Spektralbereich arbeiten.

7. Vorrichtung nach Anspruch 6, umfassend eine Lichtquelle (20) zum Beleuchten des zu überwachenden Raums mit Licht einer in dem Spektralbereich enthaltenen Wellenlänge.

8. Vorrichtung nach einem der Ansprüche 6 oder 7, wobei der Spektralbereich einen Infrarotbereich umfasst.

9. Vorrichtung nach Anspruch 6, wobei die 3D-Kamera (12), die 2D-Kamera (16) und die Lichtquelle in einem gemeinsamen Gehäuse angeordnet sind.

10. Verfahren zur Erkennung und Lokalisierung von Objekten, umfassend die Schritte:
a) Aufnahme eines ersten, dreidimensionalen Situationsbildes eines zu überwachenden Raums mittels einer 3D-Kamera (12), wobei die 3D-Kamera (12) anhand einer Laufzeitmessung von moduliertem IR Licht direkt eine Tiefeninformation zu der Bildinformation liefert;
b) Auswerten des ersten, dreidimensionalen Situationsbildes mittels geeigneter Objekterkennungsverfahren zur Bestimmung eines in dem zu überwachenden Raum vorhandenen Objekts und zur Bestimmung der Lage des Objekts im Raum;
c) Aufnahme eines zweiten, zweidimensionalen Situationsbildes eines bestimmten Bereichs des zu überwachenden Raums mittels einer 2D-Kamera (16), wobei der bestimmte Bereich dem Bereich des Raumes entspricht in dem die Lage des Objekts bestimmt wurde;
d) Auswerten des zweiten, zweidimensionalen Situationsbildes zur erneuten Bestimmung des vorhandenen Objekts.

11. Verfahren zur Erkennung und Lokalisierung von Objekten, umfassend die Schritte:
a) Aufnahme eines ersten, dreidimensionalen Situationsbildes eines zu überwachenden Raums mittels einer 3D-Kamera (12), wobei die 3D-Kamera (12) anhand einer Laufzeitmessung von moduliertem IR Licht direkt eine Tiefeninformation zu der Bildinformation liefert;
b) Auswerten des ersten, dreidimensionalen Situationsbildes mittels geeigneter Objekterkennungsverfahren zur Bestimmung eines in dem zu überwachenden Raum vorhandenen Objekts und zur Bestimmung der Lage des Objekts im Raum;
c) Aufnahme eines zweiten, zweidimensionalen Situationsbildes des zu überwachenden Raums mittels einer 2D-Kamera (16);
d) Auswerten eines bestimmten Bereichs des zweiten, zweidimensionalen Situationsbildes zur erneuten Bestimmung des vorhandenen Objekts, wobei der bestimmte Bereich dem Bereich des Raumes entspricht in dem die Lage des Objekts bestimmt wurde.

12. Verfahren nach Anspruch 10 oder 11, wobei die 3D-Kamera (12) und die 2D-Kamera (16) in dem gleichen Spektralbereich arbeiten.

13. Verfahren nach Anspruch 12 umfassend den Schritt des Ausleuchtens des zu überwachenden Raums mit Licht einer in dem Spektralbereich enthaltenen Wellenlänge.

14. Verfahren nach einem der Ansprüche 12 oder 13, wobei der Spektralbereich einen Infrarotbereich umfasst.

15. Verfahren zur Steuerung eines Rückhaltesystems in einem Fahrzeug, umfassend die Schritte:
a) Bestimmen eines Objekts und Ermittlung der Lage des Objekts im Bereich eines Fahrzeugsitzes nach einem Verfahren gemäss einem der Ansprüche 10 bis 14,
b) Erzeugen eines für die Art und Position des bestimmten Objekts spezifischen Steuersignals und Übermitteln des Steuersignals an eine Steuereinheit des Rückhaltesystems;
c) Auswählen eines geeigneten Funktionsmodus des Rückhaltesystems auf der Basis des übermittelten Steuersignals.

16. Verfahren nach Anspruch 15, wobei das Objekt einen Kindersitz umfasst.

17. Verfahren nach Anspruch 15, wobei das Objekt den Kopf eines Fahrzeuginsassen umfasst.

18. Verfahren nach Anspruch 17, wobei die Erzeugung eines Steuersignals die Berechnung einer Höhe eines Oberkörpers des Fahrzeuginsassen auf der Basis der Position des Kopfes umfasst.

19. Verfahren zur Unfallvermeidung bei einem Fahrzeug, umfassend die Schritte:
a) Bestimmen eines Objekts und Ermittlung der Lage des Objekts im Bereich einer Fahrerumgebung nach einem Verfahren gemäss einem der Ansprüche 10 bis 14,
b) Einleiten von geeigneten Maßnahmen, falls die bestimmte Lage des Objekts einem sicheren Führen des Fahrzeugs potentiell entgegensteht.

20. Verfahren nach Anspruch 19, wobei das Objekt einen Körperteil des Fahrers umfasst und wobei die geeigneten Maßnahmen eingeleitet werden, wenn die Lage des Körperteils in einem Bereich bestimmt wird, der mit einer unangebrachten Körperhaltung zum Führen des Fahrzeugs assoziiert ist.

21. Verfahren nach Anspruch 19, wobei das Objekt einen Gegenstand umfasst, und wobei die geeigneten Maßnahmen eingeleitet werden, wenn die Lage des Gegenstands in einem Sichtbereich des Fahrers bestimmt wird.

22. Verfahren nach einem der Ansprüche 19 bis 21, wobei das Einleiten von entsprechenden Maßnahmen das Erzeugen eines optischen oder akustischen Warnsignals und/oder das Auslösen eines Notbremssystems und/oder das Aufzeichnen des Fahrerverhaltens und/oder das Auswählen eines geeigneten Funktionsmodus des Rückhaltesystems umfasst.

23. Verwendung einer Vorrichtung nach einem der Ansprüche 1 bis 9 bei der Steuerung eines Rückhaltesystems in einem Fahrzeug, wobei das Rückhaltesystem in Abhängigkeit der Art des bestimmten Objekts und seiner Lage im Innenraum des Fahrzeugs in einen geeigneten Funktionsmodus geschaltet wird.

24. Verwendung einer Vorrichtung nach einem der Ansprüche 1 bis 9 bei der Steuerung eines Precrash-Systems, wobei in Abhängigkeit der Art des bestimmten Objekts und seiner Lage im Außenbereich des Fahrzeugs geeignete Sicherheitsmassnahmen eingeleitet werden.

25. Verwendung einer Vorrichtung nach einem der Ansprüche 1 bis 9 bei der Steuerung eines Diebstahlwarnsystems in einem Fahrzeug.

## Claims

1. Device (10) for detecting and locating objects comprising
a 3-D camera (12) for taking three-dimensional situation images of a space to be monitored, the 3-D camera (12) directly providing depth information in addition to image information based on a time of flight measurement of modulated IR light;
first means for evaluating the three-dimensional situation images by means of suitable object detection methods for determining an object which is present in the space to be monitored, and for determining the position of the object in the space;
a 2-D camera (16) for taking two-dimensional situation images of that region of the space to be monitored in which the position of the object has been determined; and
second means for evaluating the two-dimensional situation images by means of suitable object detection methods for determining once more the object which is present in the space to be monitored.

2. Device (10) for detecting and locating objects comprising
a 3-D camera (12) for taking three-dimensional situation images of a space to be monitored, the 3-D camera (12) directly providing depth information in addition to image information based on a time of flight measurement of modulated IR light;
first means for evaluating the three-dimensional situation images by means of suitable object detection methods for determining an object which is present in the space to be monitored, and for determining the position of the object in the space;
a 2-D camera (16) for taking two-dimensional situation images of the space to be monitored; and
second means for evaluating a specific region of the two-dimensional situation images by means of suitable object detection methods for determining once more the object which is present in the space to be monitored, the specific region corresponding to the region of the space in which the position of the object has been determined

3. Device according to Claim 1 or 2, the first means for evaluating the three-dimensional situation images and the second means for evaluating the two-dimensional situation images being implemented in a common processor unit (26)

4. Device according to one of Claims 1 to 3, the 3-D camera (12) and the 2-D camera (16) being arranged directly adjacent to one another

5. Device according to Claim 4, the 3-D camera (12) and the 2-D camera (16) being arranged in a common housing (24).

6. Device according to one of Claims 1 to 5, the 3-D camera (12) and the 2-D camera (16) operating in the same spectral region

7. Device according to Claim 6, comprising a light source (20) for illuminating the space to be monitored with light of a wavelength which is contained in the spectral region

8. Device according to one of Claims 6 or 7, the spectral region comprising an infrared region

9. Device according to Claim 6, the 3-D camera (12), the 2-D camera (16) and the light source (20) being arranged in a common housing

10. Method for detecting and locating objects, comprising the steps:
a) a first, three-dimensional situation image of a space to be monitored is taken by means of a 3-D camera (12), the 3-D camera (12) directly providing depth information in addition to image information based on a time of flight measurement of modulated IR light;
b) the first, three-dimensional situation image is evaluated by means of suitable object detection methods for determining an object which is present in the space to be monitored, and for determining the position of the object in the space;
c) a second, two-dimensional situation image of a specific region of the space to be monitored is taken by means of a 2-D camera (16), the specific region corresponding to the region of the space in which the position of the object has been determined;
d) the second, two-dimensional situation image is evaluated in order to determine once more the object which is present

11. Method for detecting and locating objects, comprising the steps
a) a first, three-dimensional situation image of a space to be monitored is taken by means of a 3-D camera (12), the 3-D camera (12) directly providing depth information in addition to image information based on a time of flight measurement of modulated IR light;
b) the first, three-dimensional situation image is evaluated by means of suitable object detection methods for determining an object which is present in the space to be monitored, and for determining the position of the object in the space;
c) a second, two-dimensional situation image of the space to be monitored is taken by means of a 2-D camera (16);
d) a specific region of the second, two-dimensional situation image is evaluated in order to determine once more the object which is present, the specific region corresponding to the region of the space in which the position of the object has been determined

12. Method according to Claim 10 or 11, the 3-D camera (12) and the 2-D camera (16) operating in the same spectral region

13. Method according to Claim 12, comprising the step of illuminating the space to be monitored with light of a wavelength which is contained in the spectral region

14. Method according to one of Claims 12 or 13, the spectral region comprising an infrared region

15. Method for controlling a restraint system in a vehicle, comprising the steps:
a) an object is determined and the position of the object in the region of a vehicle seat is detected according to a method according to one of Claims 10 to 14,
b) a control signal which is specific to the type and position of the object which has been determined is generated and the control signal is transmitted to a control unit of the restraint system;
c) a suitable function mode of the restraint system is selected on the basis of the transmitted control signal

16. Method according to Claim 15, the object comprising a child's seat

17. Method according to Claim 15, the object comprising the head of a vehicle occupant

18. Method according to Claim 17, the generation of a control signal comprising calculating a height of a torso of the vehicle occupant on the basis of the position of the head

19. Method for avoiding accidents in a vehicle, comprising the steps:
a) an object is determined and the position of the object in the region of an area surrounding the driver is detected according to a method according to one of Claims 10 to 14,
b) suitable measures are initiated if the specific position of the object potentially counteracts safe driving of the vehicle.

20. Method according to Claim 19, the object comprising a body part of the driver and the suitable measures being initiated if the position of the body part is determined in a region which is associated with an inappropriate body posture for driving the vehicle

21. Method according to Claim 19, the object comprising an item, and the suitable measures being initiated if the position of the item is determined in a field of vision of the driver

22. Method according to one of Claims 19 to 21, the initiation of corresponding measures comprising the generation of a visual or audible warning signal and/or the triggering of an emergency brake system and/or the recording of the driver's behaviour and/or the selection of a suitable function mode of the restraint system

23. Use of a device according to one of Claims 1 to 9 in the control of a restraint system in a vehicle, the restraint system being switched to a suitable function mode in accordance with the type of the object which is determined and its position in the passenger compartment of the vehicle.

24. Use of a device according to one of Claims 1 to 9, in the control of a precrash system, suitable safety measures being initiated in accordance with the type of the determined object and its position in the area outside the vehicle

25. Use of a device according to one of Claims 1 to 9, in the control of an anti-theft warning system in a vehicle.

## Revendications

1. Dispositif (10) de reconnaissance et de localisation d'objets, comprenant une caméra 3D (12) pour la prise d'images tridimensionnelles de situation d'un espace à surveiller, la caméra 3D (12) fournissant directement une information de profondeur en supplément à l'information d'image sur base d'une mesure du temps de propagation de lumière IR modulée ;
des premiers moyens pour évaluer les images tridimensionnelles de situation au moyen de procédés appropriés de reconnaissance d'objets pour déterminer un objet présent dans l'espace à surveiller et pour déterminer la position de l'objet dans l'espace;
une caméra 2D (16) pour la prise d'images bidimensionnelles de situation de la zone de l'espace à surveiller dans laquelle la position de l'objet a été déterminée et
des deuxièmes moyens pour évaluer les images bidimensionnelles de situation au moyen de procédés appropriés de reconnaissance d'objets pour déterminer de nouveau l'objet présent dans l'espace à surveiller

2. Dispositif (10) de reconnaissance et de localisation d'objets, comprenant une caméra 3D (12) pour la prise d'images tridimensionnelles de situation d'un espace à surveiller, la caméra 3D (12) fournissant directement une information de profondeur en supplément à l'information d'image sur base d'une mesure du temps de propagation de lumière IR modulée ;
des premiers moyens pour évaluer les images tridimensionnelles de situation au moyen de procédés appropriés de reconnaissance d'objets pour déterminer un objet présent dans l'espace à surveiller et pour déterminer la position de l'objet dans l'espace;
une caméra 2D (16) pour la prise d'images bidimensionnelles de situation de l'espace à surveiller et
des deuxièmes moyens pour évaluer une zone déterminée des images bidimensionnelles de situation au moyen de procédés appropriés de reconnaissance d'objets pour déterminer de nouveau l'objet présent dans l'espace à surveiller, la zone déterminée correspondant à la zone de l'espace dans laquelle la position de l'objet a été déterminée

3. Dispositif selon la revendication 1 ou 2, les premiers moyens pour évaluer les images tridimensionnelles de situation et les deuxièmes moyens pour évaluer les images tridimensionnelles de situation étant implémentés dans une unité de processeur (26) commune

4. Dispositif selon l'une des revendications 1 à 3, la caméra 3D (12) et la caméra 2D (16) étant disposées de manière à être directement voisines

5. Dispositif selon la revendication 4, la caméra 3D (12) et la caméra 2D (16) étant disposées dans un boîtier commun (24)

6. Dispositif selon l'une des revendications 1 à 5, la caméra 3D (12) et la caméra 2D (16) opérant dans la même plage spectrale

7. Dispositif selon la revendication 6, comprenant une source de lumière (20) pour éclairer l'espace à surveiller avec de la lumière d'une longueur d'onde contenue dans la plage spectrale

8. Dispositif selon l'une des revendications 6 ou 7, la plage spectrale comprenant une plage infrarouge

9. Dispositif selon la revendication 6, la caméra 3D (12), la caméra 2D (16) et la source de lumière (20) étant disposées dans un boîtier commun

10. Procédé de reconnaissance et de localisation d'objets, comprenant les étapes suivantes:
a) prise d'une première image tridimensionnelle de situation d'un espace à surveiller au moyen d'une caméra 3D (12), la caméra 3D (12) fournissant directement une information de profondeur en supplément à l'information d'image sur base d'une mesure du temps de propagation de lumière IR modulée ;
b) évaluation de la première image tridimensionnelle de situation au moyen de procédés appropriés de reconnaissance d'objets pour déterminer un objet présent dans l'espace à surveiller et pour déterminer la position de l'objet dans l'espace;
c) prise d'une deuxième image bidimensionnelle de situation d'une zone déterminée de l'espace à surveiller au moyen d'une caméra 2D (16), la zone déterminée correspondant à la zone de l'espace dans laquelle la position de l'objet a été déterminée;
d) évaluation de la deuxième image bidimensionnelle de situation pour déterminer de nouveau l'objet présent

11. Procédé de reconnaissance et de localisation d'objets, comprenant les étapes suivantes:
a) prise d'une première image tridimensionnelle de situation d'un espace à surveiller au moyen d'une caméra 3D (12), la caméra 3D (12) fournissant directement une information de profondeur en supplément à l'information d'image sur base d'une mesure du temps de propagation de lumière IR modulée ;
b) évaluation de la première image tridimensionnelle de situation au moyen de procédés appropriés de reconnaissance d'objets pour déterminer un objet présent dans l'espace à surveiller et pour déterminer la position de l'objet dans l'espace;
c) prise d'une deuxième image bidimensionnelle de situation de l'espace à surveiller au moyen d'une caméra 2D (16);
d) évaluation d'une zone déterminée de la deuxième image bidimensionnelle de situation pour déterminer de nouveau l'objet présent, la zone déterminée correspondant à la zone de l'espace dans laquelle la position de l'objet a été déterminée

12. Procédé selon la revendication 10 ou 11, la caméra 3D (12) et la caméra 2D (16) opérant dans la même plage spectrale

13. Procédé selon la revendication 12, comprenant l'étape de l'éclairage de l'espace à surveiller avec de la lumière d'une longueur d'onde contenue dans la plage spectrale

14. Procédé selon l'une des revendications 12 ou 13, la plage spectrale comprenant une plage infrarouge

15. Procédé de commande d'un système de retenue dans un véhicule, comprenant les étapes suivantes:
a) détermination d'un objet et détermination de la position de l'objet dans la zone d'un siège de véhicule selon un procédé selon l'une des revendications 10 à 14,
b) production d'un signal de commande spécifique pour l'espèce et la position de l'objet déterminé et transmission du signal de commande à une unité de commande du système de retenue,
c) sélection d'un mode de fonctionnement approprié du système de retenue sur la base du signal de commande transmis

16. Procédé selon la revendication 15, l'objet comprenant un siège d'enfant

17. Procédé selon la revendication 15, l'objet comprenant la tête d'une personne transportée dans un véhicule

18. Procédé selon la revendication 17, la production d'un signal de commande comprenant le calcul d'une hauteur d'un torse de la personne transportée dans un véhicule sur la base de la position de la tête

19. Procédé destiné à éviter des accidents dans le cas d'un véhicule, comprenant les étapes suivantes
a) détermination d'un objet et détermination de la position de l'objet dans la zone d'un environnement du conducteur selon un procédé selon l'une des revendications 10 à 14,
b) introduction de mesures appropriées si la position de l'objet, telle que déterminée, constitue un obstacle potentiel à une conduite sûre du véhicule

20. Procédé selon la revendication 19, l'objet comprenant une partie du corps du conducteur et les mesures appropriées étant introduites lorsque la position de la partie du corps est déterminée dans une zone qui est associée à une tenue du corps inappropriée pour la conduite du véhicule

21. Procédé selon la revendication 19, l'objet comprenant un objet et les mesures appropriées étant introduites lorsque la position de l'objet est déterminée dans un champ de visée du conducteur

22. Procédé selon l'une des revendications 19 à 21, l'introduction de mesures adéquates comprenant la production d'un signal d'avertissement optique ou acoustique et/ou le déclenchement d'un système de freinage d'urgence et/ou l'enregistrement du comportement du conducteur et/ou la sélection d'un mode de fonctionnement approprié du système de retenue

23. Utilisation d'un dispositif selon l'une des revendications 1 à 9 dans le cadre de la commande d'un système de retenue dans un véhicule, le système de retenue étant commuté dans un mode de fonctionnement approprié en fonction de l'espèce de l'objet déterminé et de sa position dans l'espace intérieur du véhicule

24. Utilisation d'un dispositif selon l'une des revendications 1 à 9 dans le cadre de la commande d'un système de précrash, des mesures de sécurité appropriées étant introduites en fonction de l'espèce de l'objet déterminé et de sa position dans la zone extérieure du véhicule

25. Utilisation d'un dispositif selon l'une des revendications 1 à 9 dans le cadre de la commande d'un système d'avertissement anti-vol dans un véhicule
